(19)

**Europäisches Patentamt**

**European Patent Office**

**Office européen des brevets**

(11)  **EP 3 524 925 B1**

(12)  # EUROPÄISCHE PATENTSCHRIFT

(45) Veröffentlichungstag und Bekanntmachung des Hinweises auf die Patenterteilung:
**09.09.2020  Patentblatt 2020/37**

(21) Anmeldenummer: **19155665.3**

(22) Anmeldetag: **06.02.2019**

(51) Int Cl.:
$F41G\ 7/00$ (2006.01)      $H04N\ 5/33$ (2006.01)
$H04N\ 5/357$ (2011.01)      $G01S\ 3/78$ (2006.01)
$F41G\ 7/22$ (2006.01)      $H04N\ 17/00$ (2006.01)

(54)  **VERFAHREN ZUR BESTIMMUNG VON KENNLINIENKORREKTURFAKTOREN EINES IM INFRAROTEN SPEKTRALBEREICH ABBILDENDEN MATRIXDETEKTORS**

METHOD FOR THE DETERMINATION OF CHARACTERISTIC CURVE CORRECTION FACTORS OF A MATRIX DETECTOR IN THE INFRARED SPECTRUM RANGE

PROCÉDÉ DE DÉTERMINATION DES FACTEURS DE CORRECTION DE COURBES CARACTÉRISTIQUES D'UN DÉTECTEUR MATRICIEL DE REPRÉSENTATION DANS LA PLAGE SPECTRALE INFRAROUGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2018  DE 102018001076**

(43) Veröffentlichungstag der Anmeldung:
**14.08.2019  Patentblatt 2019/33**

(73) Patentinhaber: **Diehl Defence GmbH & Co. KG 88662 Überlingen (DE)**

(72) Erfinder: **Gagel, Florian 88690 Uhldingen-Mühlhofen (DE)**

(74) Vertreter: **Diehl Patentabteilung c/o Diehl Stiftung & Co. KG Stephanstraße 49 90478 Nürnberg (DE)**

(56) Entgegenhaltungen:
**EP-A2- 2 109 309      FR-A1- 3 000 789**

- **LESZEK SWIERKOWSKI, ROBERT A. JOYCE, AND OWEN M. WILLIAMS: "Emissive infrared projector temperature resolution limiting factors", TECHNOLOGIES FOR SYNTHETIC ENVIRONMENTS: HARDWARE-IN-THE-LOOP TESTING IX, Bd. 5408, 4. August 2004 (2004-08-04), XP040184458, DOI: 10.1117/12.542937**
- **OFER NESHER, PHILIP C. KLIPSTEIN, AND ELIEZER WEISS: "Advanced IR detector design at SCD: from D3C to ABCS", PROC. SPIE 5359, QUANTUM SENSING AND NANOPHOTONIC DEVICES, Bd. 5359, 6. Juli 2004 (2004-07-06), XP040181370, DOI: 10.1117/12.531401**

**Beschreibung**

Die Erfindung betrifft ein Verfahren zum Bestimmen von Kennlinienkorrekturfaktoren eines im infraroten Spektralbereich abbildenden Matrixdetektors.

Automatisiert gesteuerte Fahrzeuge können über einen Matrixdetektor verfügen, auf den ein Bereich der umgebenden Objektszene abgebildet wird. Die Bildinhalte werden ausgewertet und das Fahrzeug wird anhand der Auswertungsergebnisse gesteuert, beispielsweise um ein erkanntes Hindernis herumgeführt oder auf ein erkanntes Ziel zugeführt. Gerade bei Infrarotbildern besteht jedoch das Problem, dass die einzelnen Detektorelemente des Matrixdetektors herstellungsbedingt deutliche Bildabweichungen relativ zueinander aufweisen, sodass auch in einem Bild ohne abgebildete Gegenstände deutliche Strukturen sichtbar sind. Solche Bildartefakte können zu Fehlsteuerungen des Fahrzeugs führen und sind daher möglichst gut zu korrigieren.

Eine solche Korrektur von Infrarotdetektoren ist als sogenannte Non Uniformity Correction/Compensation (NUC) bekannt. Je nach Herstellung des Matrixdetektors bleiben jedoch auch nach einer solchen Korrektur noch deutliche Bildartefakte übrig, die ein zuverlässiges Steuern des Fahrzeugs stören.

Aus der FR 3 000 789 A1 ist ein Verfahren zum Kalibrieren eines Detektors bekannt, der in einem Konus eines Flugkörpers untergebracht ist. Dabei wird ein Bild eines schwarzen Körpers bei einer ersten Temperatur erzeugt und ein Versatz und Gewinn für jedes Pixel für eine Integrationszeit des Detektors berechnet. Das Gleiche wird für ein bei einer zweiten Temperatur erzeugtes Bild berechnet. Falls es mehrere Integrationszeiten gibt, werden die Schritte des Berechnens eines Versatzes und Gewinns für jede andere Integrationszeit des Detektors mit der ersten und zweiten Temperatur wiederholt.

Es ist daher eine Aufgabe der Erfindung, ein verbessertes Verfahren zur Kennlinienkorrektur eines im infraroten Spektralbereich abbildenden Matrixdetektors anzugeben.

Diese Aufgabe wird durch ein Verfahren gemäß den Merkmalen von Patentanspruch 1 gelöst, bei dem mit dem Matrixdetektor eine Fläche homogener Temperatur bei zwei verschiedenen Temperaturen mit jeweils zwei Bildern unterschiedlicher Integrationszeit aufgenommen wird und für jedes der Bildelemente aus den jeweils vier Bildelementwerten zu den beiden Temperaturen jeweils eine Signalsteigung über die Integrationszeit und aus der Differenz der Signalsteigungen der Gain ermittelt wird und Kennlinienkorrekturfaktoren für den Gain hinterlegt werden.

Ein Matrixdetektor umfasst eine Vielzahl von zueinander zweidimensional angeordneten Detektorelementen, die jeweils als Signal einen Bildelementwert ausgeben können, der über die Integrationszeit ansteigt und im Folgenden auch als Signal bezeichnet wird. Die Signale von mehreren Detektorelementen können auch zu einem einzigen Bildelementwert zusammengeführt werden, weshalb im Folgenden zwischen Detektorelement und Bildelement unterschieden wird. Das Signal ist einerseits von dem auf ein Detektorelement fallenden Photonenstrom $\Phi$ und andererseits von Detektorelementeigenschaften abhängig, die die Umwandlung des Photonenstroms in das Signal bestimmen.

Das Signal kann sich aus drei Komponenten zusammensetzen, dem Signaloffset $\omega$, auch einfach nur Offset genannt, dem Gain $\gamma$ und dem Dunkelstrom $\theta$. Während der Signaloffset $\omega$ vom Photonenstrom $\Phi$ und der Integrationszeit $t$ unabhängig ist, vergrößert sich das Signal integrationszeitabhängig durch den Gain $\gamma$ und den Dunkelstrom $\theta$, wobei jedoch nur der Gain $\gamma$ vom Photonenstrom $\Phi$ abhängig ist.

Zusammengefasst ergibt sich folgende Relation:

$$s_i = \omega_i + t\left(\gamma_i f\left(\Phi_i\right) + \theta_i\right)$$

Mit

$S_i$: Signal des Detektorelements i,
$\Phi$: Photonenstrom,
$\omega_i$: Signaloffset des Detektorelements i,
$\gamma_i$: Gain des Detektorelements i und
$\theta_i$: Dunkelstrom des Detektorelements i.

Um nun zu einem korrigierten Signal S zu gelangen, ist der Messwert mit den Kennlinienkorrekturfaktoren für Signaloffset, Gain und Dunkelstrom zu korrigieren, sodass sich folgende Relation ergibt:

$$S_i = \Omega_i + t\left(\Gamma_i f\left(\Phi_i\right) + \Theta_i\right)$$

mit

$S_i$: korrigiertes Signal des Detektorelements i,

$\Omega_i$: Kennlinienkorrekturfaktor für den Signaloffset des Detektorelements i,

$\Gamma_i$: Kennlinienkorrekturfaktor für den Gain des Detektorelements i und

$\Theta_i$: Kennlinienkorrekturfaktor für den Dunkelstrom des Detektorelements i.

Der Gain und der Kennlinienkorrekturfaktor für den Gain sind äquivalente Begriffe, da die Kenntnis des Gains für ein Bildelement die Kenntnis des Kennlinienkorrekturfaktors des Gains für diese Bildelemente beinhaltet, der sich aus dem Verhältnis des Gains des Bildelements zu einem Referenzwert ergibt, der für alle Bildelemente gleich sein kann. Die Begriffe Gain und Kennlinienkorrekturfaktor für den Gain werden daher im Folgenden äquivalent verwendet. Das gleiche gilt für den Signaloffset und den Dunkelstrom. Im Folgenden wird zudem auf den Index i der Übersichtlichkeit halber verzichtet, wobei die Kennlinienkorrekturfaktoren zweckmäßigerweise für jedes Bildelement ermittelt werden. Liegt für jedes Detektorelement ein Bildelement vor, so werden die Kennlinienkorrekturfaktoren zweckmäßigerweise für jedes Detektorelement ermittelt.

Während der Signaloffset beziehungsweise dessen Kennlinienkorrekturfaktoren für jedes Bildelement relativ einfach zu ermitteln ist, ist die Bestimmung des Gains komplexer. Die Erfindung liefert jedoch ein einfaches Verfahren zur bildelementweisen Bestimmung der Kennlinienkorrekturfaktoren des Gains, sodass das Signal der Bildelemente beziehungsweise Detektorelemente mit diesen sehr gut korrigiert werden kann. Das Gesamtbild wird hierdurch deutlich homogener, insbesondere wenn zusätzlich optional der Signaloffset korrigiert wird, und die Steuerung des Fahrzeugs kann zuverlässiger erfolgen.

Die temperaturhomogene Fläche strahlt in jedem aufgenommen Bereich mit der gleichen Temperatur beziehungsweise Temperaturverteilung, wobei ein spektralhomogener schwarzer Strahler verwendet werden kann, dessen Temperatur im infraroten Spektralbereich liegt. Bei einer Aufnahme der temperaturhomogenen Fläche sollten alle Signale der Bildelemente beziehungsweise Detektorelemente gleich sein. Dies ist in der Realität nicht der Fall. Insofern können Abweichungen von einem gemeinsamen Referenzwert, zum Beispiel dem Mittelwert des Gains über alle Bildelemente, zur bildelementweisen Bestimmung der Kennlinienkorrekturfaktoren verwendet werden. Als Kennlinienkorrekturfaktoren für den Gain können Abweichungen der Steigungen beziehungsweise Steigungsdifferenzen vom Mittelwert der Steigungen beziehungsweise Differenzen verwendet werden. Die Bestimmung der Kennlinienkorrekturfaktoren für den Gain erfolgt zweckmäßigerweise in einem Gebäude, beispielsweise in einem Labor, und vor einem Einsatz des Matrixdetektors in einem Fahrzeug. Die Kennlinienkorrekturfaktoren für den Signaloffset können auch erst während eines Einsatzes des Detektors im Fahrzeug bestimmt werden.

Die Integrationszeiten sind für die beiden Bilder gleicher Temperatur unterschiedlich, wobei für die unterschiedlichen Temperaturen die gleichen Integrationszeitenpaare verwendet werden können. Es ist jedoch ebenso gut möglich, drei oder vier unterschiedliche Integrationszeiten zu wählen, sodass jedes der vier Bilder mit einer individuellen Integrationszeit aufgenommen wurde.

Es liegen für jede Temperatur zwei Signale unterschiedlicher Stärke vor, durch die eine lineare Funktion in Abhängigkeit der Integrationszeit gelegt werden kann. Die Signalsteigung ist in diesem Fall konstant. Aus den beiden verschiedenen Steigungen für die beiden Temperaturen kann für jedes Bildelement eine Steigungsdifferenz, beispielsweise in Form eines Werts, ermittelt werden. In gleicher Weise kann ein Referenzwert für alle Bildelemente ermittelt werden, beispielsweise ein Mittelwert aller Signalsteigungen beziehungsweise Steigungsdifferenzen, ein Median oder ein anderer geeigneter Wert. Der Unterschied von der bildelement-individuellen Steigungsdifferenz zum Steigungsreferenzwert kann als Kennlinienkorrekturfaktor hinterlegt werden. Die Hinterlegung geschieht zweckmäßigerweise durch Abspeichern in einen Speicher, der zweckmäßigerweise einer Bildverarbeitungselektronik zum Korrigieren der vom Matrixdetektor aufgenommenen Bilder zugänglich ist.

Wie erwähnt, ist es sinnvoll, wenn in einer vorteilhaften Ausführungsform der Erfindung die Kennlinienkorrekturfaktoren für den Signaloffset für jedes der Bildelemente aus zumindest zwei einer der Temperaturen zugeordneten Bildelementwerten ermittelt werden. Beispielsweise wird der Signalwert genommen, der sich aus der Steigungsgeraden beim Integrationszeitwert t = 0 ergibt. Zweckmäßigerweise wird der Signaloffset von den Bildelementwerten abgezogen und der Gain aus den derart verbleibenden Bildelementwerten ermittelt.

Die Temperaturhomogenität der abgebildeten Fläche des schwarzen Strahlers ist von wesentlicher Bedeutung für die Qualität der Signalkorrektur. Es ist daher sinnvoll, wenn der schwarze Strahler beziehungsweise die temperaturhomogene Fläche in einem Gebäude abgebildet wird, um eine möglichst gute Kontrolle über die abgebildete Fläche zu erhalten. Entsprechend ist es vorteilhaft, wenn die Kennlinienkorrekturfaktoren für den Gain bestimmt werden, während der Matrixdetektor in einem Gebäude ist. Auch die Kennlinienkorrekturfaktoren für den Signaloffset können im Gebäude bestimmt werden. Allerdings kann es sein, dass der Signaloffset über einen Zeitraum von Tagen, Wochen oder Monaten erheblich wandert, sodass er in einem späteren Einsatz deutlich von den Laborwerten abweicht. Da der Signaloffset jedoch weder von der Temperatur noch der Integrationszeit abhängig ist, kann er auch während eines späteren Einsatzes des Matrixdetektors in einem Fahrzeug, beispielsweise in einem Lenkflugkörper, bestimmt werden. Die Kennlinien der den Bildelementen zugeordneten Detektorelemente können dann unter Verwendung der Kennlinienkorrekturfaktoren für den Signaloffset während des Einsatzes korrigiert werden. Selbstverständlich ist es auch möglich, den Signaloffset bereits unter Laborbedingungen zu ermitteln und abzuspeichern. Im Einsatz kann dann eine Offset-Korrektur ermittelt werden, mit der die laborbedingten Kennlinienkorrekturfaktoren während des Einsatzes ergänzt oder überschrieben werden.

Bei einer zeitlich kontinuierlichen Strahlungsleistung der temperaturhomogenen Fläche können die Bilder unterschiedlicher Integrationszeit mehr oder weniger zeitlich nah zueinander aufgenommen werden. Soll jedoch der Signaloffset im Einsatz ermittelt werden, so wird eine vermutlich stark fluktuierende Objektszene der Umgebung auf den Matrixdetektor abgebildet. Insbesondere in dieser Situation ist es sehr vorteilhaft, wenn die beiden Bilder mit unterschiedlicher Integrationszeit unmittelbar hintereinander aufgenommen werden. Unmittelbar kann hierbei bedeuten, dass zwischen den beiden Bildern keine weiteren oder maximal drei weitere vom Matrixdetektor aufgenommene Bilder liegen. Beispielsweise werden fortlaufend alternierend Bilder zu unterschiedlichen Integrationszeiten vom Matrixdetektor aufgenommen.

Eine noch weitergehende Bildkorrektur kann erreicht werden, wenn unter Verwendung zumindest der einer der Temperaturen zugeordneten Bildelementwerte ein Dunkelstrom für jedes der Bildelemente festgelegt wird. Die Kennlinien der den Bildelementen zugeordneten Detektorelemente kann nun unter Verwendung der Kennlinienkorrekturfaktoren des Dunkelstroms korrigiert werden.

Auch der Dunkelstrom ist von der Integrationszeit abhängig, sodass die Signalsteigungen zum einen aus der konstanten Komponente des Dunkelstroms und zum anderen aus einer photonenflussabhängigen beziehungsweise temperaturabhängigen Komponente des Gains gebildet werden. Nur der Gain reagiert auf Szeneänderungen. Hier besteht das Problem, dass es zwar für den Photonenfluss eine theoretische Abhängigkeit von der Blackbody-Temperatur gibt, aber in die gesamte Detektorantwort beziehungsweise das Signal der einzelnen Detektorelemente so viele Größen eingehen, dass es für die Funktion des Signals in Abhängigkeit von dem Photonenfluss kein einfaches Modell gibt. Sicher ist lediglich die Monotonie in der Temperatur, wobei das Signal also mit ansteigender Temperatur wächst. Entsprechend ist die Trennung von Gain und Dunkelstrom schwierig. Allerdings übernimmt der Dunkelstrom aufgrund seiner Unempfindlichkeit gegenüber Temperaturänderungen bei den Steigungsbildern nur die Rolle eines Offsets, ist also konstant mit der Temperatur. Durch die Verwendung der Steigungen kann der Dunkelstrom insofern als nur von den einzelnen Bildelementen abhängige Konstante abgezogen werden.

Insofern kann als Dunkelstrom eine der Signalsteigungen oder eine Summation aus beiden Signalsteigungen verwendet werden. Eine Summation ist in diesem Zusammenhang eine Größe, die die Summe oder Differenz der beiden Signalsteigungen enthält, zum Beispiel den Mittelwert der beiden Signalsteigungen. Als Kennlinienkorrekturfaktor für den Dunkelstrom kann insofern die Abweichung des Mittelwerts der beiden Signalsteigungen eines Bildelements beziehungsweise Detektorelements vom Mittelwert der Signalsteigungsdifferenz über alle Bildelemente beziehungsweise Detektorelemente verwendet werden. Anstelle des Mittelwerts kann generell auch eine andere geeignete Größe verwendet werden, beispielsweise ein Median oder nur eine der beiden Signalsteigungen.

In einer weiteren vorteilhaften Ausgestaltung der Erfindung wird der Gain aus der Differenz der beiden Signalsteigungen bestimmt. Der Unterschied der beiden Signalsteigungen liefert genau den photonenflussabhängigen Anteil am Signal, sodass dieser als Gain verwendet werden kann.

Entsprechend können die Kennlinienkorrekturfaktoren für den Gain aus der mittleren Differenz der Signalsteigungen dividiert durch die bildelementindividuellen Differenzen der Signalsteigung gebildet werden. Es kann also für jedes Bildelement beziehungsweise Detektorelement dessen Steigungsdifferenz durch die mittlere Steigungsdifferenz über alle Bildelemente beziehungsweise Detektorelemente verwendet werden. Anstelle der mittleren Differenz kann eine andere aus der Differenz über alle Bildelemente gebildete Größe verwendet werden, beispielsweise der Median oder eine andere geeignete Größe.

Hinsichtlich der Reihenfolge der Bestimmung der einzelnen Kennlinienkorrekturfaktoren ist es vorteilhaft, wenn zunächst die Kennlinienkorrekturfaktoren für den Signaloffset, dann für den Dunkelstrom und zuletzt für den Gain bestimmt werden. Die Bestimmung der Kennlinienkorrekturfaktoren für den Dunkelstrom kann die Verwendung der Kennlinienkorrekturfaktoren für den Signaloffset beinhalten. Ebenso kann die Bestimmung der Kennlinienkorrekturfaktoren für den Gain unter Verwendung der Kennlinienkorrekturfaktoren für den Dunkelstrom erfolgen.

Eine genauere Korrektur des Signaloffsets kann erreicht werden, wenn die Kennlinienkorrekturfaktoren für den Signaloffset aus den Bildwerten beider Aufnahmetemperaturen bestimmt werden, beispielsweise indem sie jeweils als Mittelwert aus den beiden Signaloffsets gebildet werden. In die Realität werden die beiden Steigungslinien sich nicht genau am Integrationszeitnullpunkt kreuzen. Die Verwendung des Mittelwerts aus beiden Signaloffsets wird daher über alle Bildelemente hinweg zu einer Korrekturverbesserung führen.

Die zwei verschiedenen Temperaturen des temperaturhomogenen Strahlers werden zweckmäßigerweise so gewählt, dass der Temperaturbereich zwischen ihnen den Hauptdetektionsspektralbereich des Matrixdetektors zumindest überwiegend abdeckt. Besonders zweckmäßig sind Temperaturen zwischen 0 °C und 150 °C, insbesondere zwischen 30 °C und 120 °C. Die weiteren Temperaturen beziehungsweise Infrarotfarben des Matrixdetektors können so korrigiert werden, dass für solche Temperaturen die Kennlinienkorrekturfaktoren aus den beiden Temperaturen interpoliert werden. Die Interpolation beinhaltet im Folgenden auch eine Extrapolation. Die Inter- beziehungsweise Extrapolation kann linear oder unter Verwendung einer Funktion in Abhängigkeit des Strahlungsflusses von der Temperatur sein.

Die Detektortemperatur des Matrixdetektors bildet eine weitere unabhängige Variable bei den Kennlinienkorrekturfaktoren. Diese sind also von der Detektortemperatur abhängig. Insofern ist es vorteilhaft, wenn die Detektortemperatur des Matrixdetektors bestimmt wird und die Kennlinienkorrekturfaktoren in Abhängigkeit von der Detektortemperatur bestimmt werden. Zweckmäßigerweise werden die Kennlinienkorrekturfaktoren für mehrere unterschiedliche Detektortemperaturen ermittelt. Die Kennlinienkorrekturfaktoren für andere Detektortemperaturen können dann durch Inter- beziehungsweise durch Extrapolation gebildet werden.

Die Erfindung ist außerdem gerichtet auf ein Verfahren zum Steuern eines Lenkflugkörpers, bei dem die Kennlinienkorrekturfaktoren insbesondere mit dem oben erwähnten erfindungsgemäßen Verfahren ermittelt werden. Vorteilhafterweise werden die Kennlinienkorrekturfaktoren für den Gain und insbesondere auch für den Dunkelstrom vor einem Einsatz des Lenkflugkörpers bestimmt, zweckmäßigerweise indem der Matrixdetektor innerhalb eines Gebäudes liegt. Die Kennlinienkorrekturfaktoren für den Offset können an einem späteren Einsatz bestimmt beziehungsweise korrigiert werden.

Der Lenkflugkörper, der den Matrixdetektor in seinem Suchkopf enthält, kann zu einem Einsatzort gebracht und dort gestartet werden. Mit dem Matrixdetektor kann vor oder nach dem Start eine Umgebung mit zwei Bildern unterschiedlicher Integrationszeit aufgenommen werden, und für jedes der Bildelemente kann aus den beiden Bildwerten ein Signaloffset ermittelt werden. Aufgrund der stark fluktuierenden Szene ist es zweckmäßig, wenn die beiden Bilder unterschiedlicher Integrationszeit unmittelbar hintereinander aufgenommen werden. Nun kann für jedes der Bildelemente aus den beiden Bildwerten ein Signaloffset beziehungsweise die Kennlinienkorrekturfaktoren für den Signaloffset ermittelt werden. In einem weiteren Schritt können die Bilder unter Verwendung der Kennlinienkorrekturfaktoren für Signaloffset und Gain korrigiert werden. Der Lenkflugkörper kann unter Verwendung der zumindest für den Gain korrigierten Bilder gesteuert werden.

Um eine zügige Zielverfolgung beziehungsweise Steuerung des Lenkflugkörpers zu erreichen, ist es vorteilhaft, wenn die beiden Bilder unterschiedlicher Integrationszeit bereits während eines Herunterkühlens des Matrixdetektors aufgenommen werden. Das Herunterkühlen geschieht beispielsweise zum Herstellen einer Einsatzbereitschaft des Matrixdetektors. Auf diese Weise kann der Signaloffset beziehungsweise dessen Kennlinien bereits bestimmt werden, wenn der Matrixdetektor noch nicht vollständig einsatzbereit ist.

Die Erfindung ist des Weiteren gerichtet auf einen Lenkflugkörper mit einem Suchkopf enthaltend einen Matrixdetektor, einen Datenspeicher und eine Steuereinheit zum Steuern eines Einsatzflugs. Zum zuverlässigen Korrigieren von Bildern zur Verwendung der Lenkflugkörpersteuerung enthält der Datenspeicher erfindungsgemäß Kennlinienkorrekturfaktoren für den Gain der Detektorelemente des Matrixdetektors. Diese wurden zweckmäßigerweise nach dem oben beschriebenen erfindungsgemäßen Verfahren gewonnen.

Unabhängig davon, nach welchem Verfahren die Kennlinienkorrekturfaktoren für den Gain, den Dunkelstrom und/oder den Signaloffset der Detektorelemente des Matrixdetektors ermittelt wurden, ist es vorteilhaft, wenn die Steuereinheit dazu vorbereitet ist, Kennlinienkorrekturfaktoren für den Signaloffset der Detektorelemente des Matrixdetektors anhand von zwei unmittelbar hintereinander aufgenommenen Szenebildern unterschiedlicher Integrationszeit während eines Einsatzes zu bestimmen. Bildartefakte aufgrund eines zwischenzeitlich fluktuierenden Signaloffset können hierdurch gering gehalten werden.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:

FIG 1 einen Lenkflugkörper mit einem Matrixdetektor in einem Suchkopf,

FIG 2    ein Flussdiagramm zum Bestimmen von Kennlinienkorrekturfaktoren,

FIG 3    ein Flussdiagramm zum Korrigieren von Signalen von Detektorelementen eines Matrixdetektors,

FIG 4    ein Diagramm, in dem Detektorelementsignale über die Integrationszeit aufgetragen sind und

FIG 5    ein Diagramm mit einer rechnerisch veränderten Signalkennlinie über die Integrationszeit.

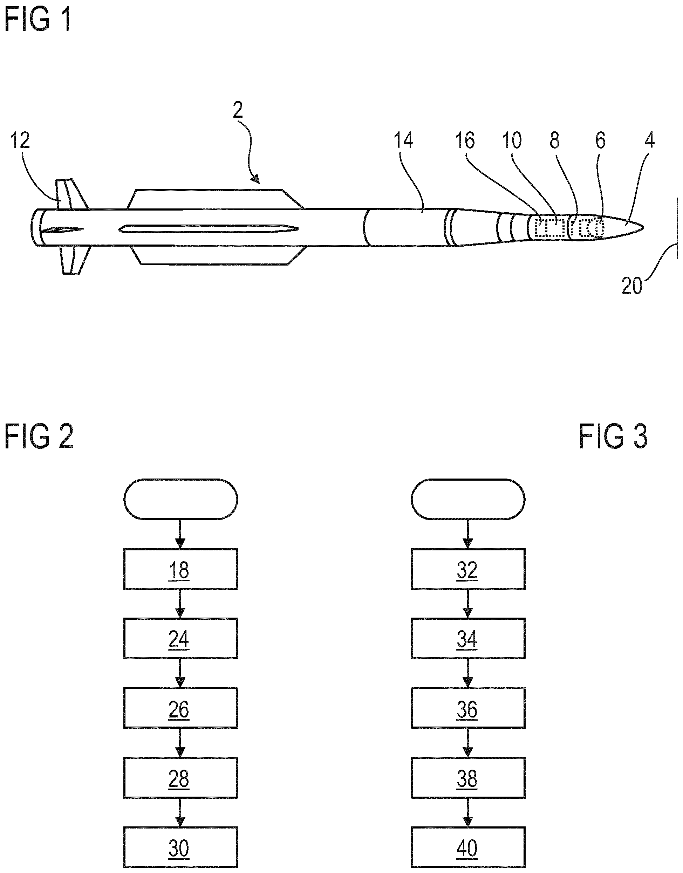

FIG 1 zeigt einen Lenkflugkörper 2 mit einem Suchkopf 4, der eine Optik 6 aufweist, die eine Umgebungsszenerie vor dem Lenkflugkörper 2 auf einen Matrixdetektor 8 abbildet. Der Matrixdetektor 8 ist ein im infraroten Spektralbereich empfindlicher Matrixdetektor und umfasst m x n Detektorelemente, die in Zeilen und Spalten, hexagonal oder auf eine andere Weise in einer Fläche angeordnet sind, auf die die Optik 6 abbildet. Die Art des Matrixdetektors ist ein Fokal Plane Array (FPA). Die Signale der Detektorelemente des Matrixdetektors 8 werden von einer Steuereinheit 10 ausgewertet, die aus den Bildinhalten der vom Matrixdetektor 8 erzeugten Bilder einen Gegenstand als solchen erkennen. Der Gegenstand kann ein Hindernis oder ein Ziel sein, wobei die Steuereinheit 10 den Flug des Lenkflugkörpers 2 um das Hindernis herum beziehungsweise zum Ziel hin lenkt. Die Steuerung geschieht beispielsweise über auslenkbare Lenkflügel 12, mit denen der Flug des Lenkflugkörpers 2 gelenkt werden und beispielsweise ein Wirkkörper 14 in ein Ziel gebracht werden kann.

Herstellungsbedingt sind die Signale der einzelnen Detektorelemente des Matrixdetektors 8 in ihrem Signal zueinander inhomogen. Bei exakt gleich einfallendem Photonenstrom liefern sie daher ein unterschiedliches Signal. Dies führt zu Bildfehlern, die das Auffassen des Gegenstands deutlich erschweren können, insbesondere wenn dieser noch in weiter Ferne zum Lenkflugkörper 2 ist. Zum Korrigieren solcher Artefakte können für jedes Detektorelement des Matrixdetektors 8 Kennlinienkorrekturfaktoren in einem der Steuereinheit 10 zugänglichen Datenspeicher 16 abgelegt werden. Mit diesem kann das Signal der einzelnen Detektorelemente nun korrigiert werden, sodass die Bildfehler verringert werden.

FIG 2 zeigt ein Flussdiagramm zum Bestimmen solcher Kennlinienkorrekturfaktoren. Hierzu wird in einem ersten Verfahrensabschnitt 18 eine Fläche 20 homogener Temperatur, beispielsweise eines schwarzen Strahlers in einem Gebäude, auf den Matrixdetektor 8 abgebildet. Die Fläche 20 ist in FIG 1 nur schematisch dargestellt. Zur Abbildung reicht es aus, wenn nur der Suchkopf 4 oder nur der Matrixdetektor 8 mit einer geeigneten Optik 6 und einer Auswerteeinheit im Gebäude ist.

Anschließend werden zwei Bilder dieser Fläche 20 aufgenommen, wobei die Bilder mit unterschiedlicher Integrationszeit aufgenommen werden. Anschließend wird eine weitere Fläche oder die gleiche Fläche 20 mit einer anderen homogenen Temperatur auf den Matrixdetektor 8 abgebildet und es werden erneut zwei Bilder mit unterschiedlicher Integrationszeit aufgenommen.

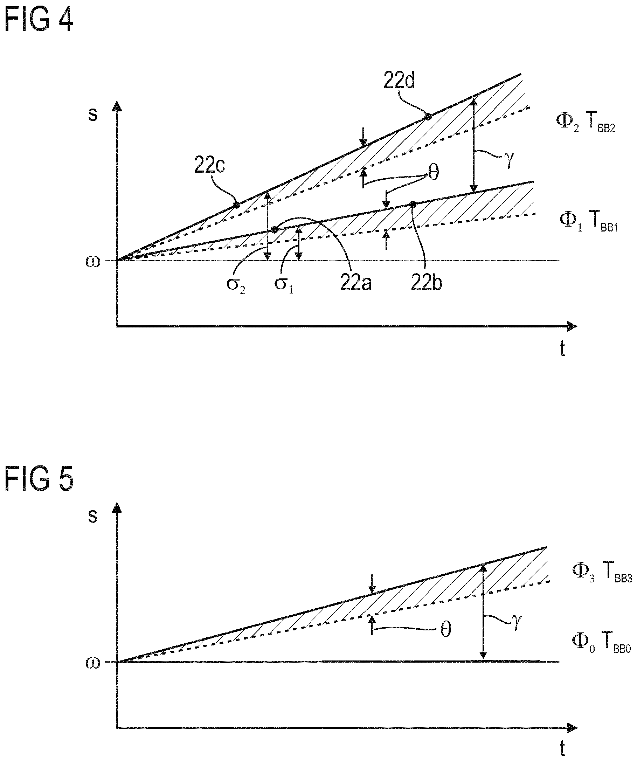

Ein Ergebnis dieses Verfahrensabschnitts ist schematisch in FIG 4 dargestellt. FIG 4 zeigt ein Signal s ausgelöst durch einen Photonenfluss $\Phi$, der auf das Detektorelement trifft, aufgetragen über die Integrationszeit t des aufgenommenen Bilds. Dargestellt sind die vier Messpunkte 22a bis 22d, die das Detektorelement für die vier Bilder als Signale ausgegeben hat. Das erste Bild, das mit der Schwarzkörpertemperatur $T_{BB1}$ aufgenommen wurde, lieferte die beiden Messpunkte 22a und 22b. Die beiden weiteren Bilder, die bei der höheren Schwarzkörpertemperatur $T_{BB2}$ aufgenommen wurden, liefern die Messpunkte 22c und 22d. Die Integrationszeitenpaare für die beiden Schwarzkörpertemperaturen $T_{BB}$ können gleich sein, dies ist jedoch nicht notwendig. In FIG 4 sind die Integrationszeiten t aller vier Bilder unterschiedlich zueinander.

Das Signal s setzt sich im Wesentlichen aus drei Signalanteilen zusammen: dem Signaloffset $\omega$, dem Signal-Gain oder einfach nur Gain $\gamma$ und dem Dunkelstrom $\theta$. Der Signaloffset $\omega$ ist über die Integrationszeit t konstant, wie in FIG 4 durch die gerade Linie bei $\omega$ dargestellt ist. Integrationszeitabhängig ist der Gain $\gamma$ und der Dunkelstrom $\theta$. Während der Dunkelstrom $\theta$ zwar linear mit der Integrationszeit t wächst, ist er unabhängig von der Temperatur $T_{BB}$ der aufgenommenen Fläche 20. In FIG 4 ist der Dunkelstromanteil am Signal s schraffiert dargestellt. Er ist zwar unbekannt, jedoch für beide Temperaturen $T_{BB}$ gleich.

In dem nächstfolgenden Verfahrensabschnitt 24 werden die Steigungen $\sigma_1$ und $\sigma_2$ der Signale s in Abhängigkeit von der Integrationszeit t berechnet. Die Steigungen $\sigma_{1,2}$ sind in FIG 4 mit Doppelpfeilen angedeutet und ergeben sich unmittelbar aus einer geraden Linie, die durch die beiden Messpunkte 22a, 22b beziehungsweise 22c, 22d für eine Temperatur $T_{BB}$ verläuft. Bei idealem Verlauf der beiden Linien schneiden sie sich bei verschwindender Integrationszeit, t = 0, und markieren den Signaloffset $\omega$ des Signals s. Dieser ist in FIG 4 durch die horizontale gestrichelte Linie dargestellt. Entsprechend wird im Verfahrensabschnitt 26 der Signaloffset $\omega$ für das Detektorelement berechnet. Da die Realität vom in FIG 4 dargestellten Idealfall abweicht, ist es sinnvoll, den Mittelwert der beiden Signaloffsets $\omega$ zu wählen, die sich aus den Schnittpunkten der Steigungslinien durch die Messpunkte 22 mit einer Linie für t = 0 ergeben.

Der Signaloffset $\omega$ kann nun für jedes Detektorelement bestimmt werden und daraus ein Referenzwert für den Signaloffset. Aus den Differenzen der einzelnen Signaloffsets $\omega$ zum Referenzwert ergeben sich dann die Kennlinien-

korrekturfaktoren $\Omega$ für den Signaloffset für jedes Detektorelement. Für die weiteren Rechnungen kann nun der Signaloffset $\omega$ vom Signal s beziehungsweise den Messpunkten 22 abgezogen werden. Dies ist jedoch optional.

Im nächsten Verfahrensabschnitt 28 wird der Gain $\gamma$ für das Detektorelement bestimmt. Der Gain $\gamma$ ist abhängig von der Schwarzkörpertemperatur $T_{BB}$ und ergibt sich aus der Differenz der beiden Steigungen $\sigma$, wie in FIG 4 durch den Doppelpfeil angedeutet ist. Der Gain $\gamma$ kann nur für die beiden Schwarzkörpertemperaturen $T_{BB}$ bestimmt werden, kann aber als Kennlinienkorrekturfaktor $\Gamma$ für weitere Schwarzkörpertemperaturen $T_{BB}$ inter- beziehungsweise extrapoliert werden. Die Kennlinienkorrekturfaktoren $\Gamma$ für den Gain werden beispielsweise linear zur Schwarzkörpertemperatur $T_{BB}$ abgespeichert, sodass hieraus die Korrekturen für beliebige andere Schwarzkörpertemperaturen $T_{BB}$ errechnet werden können. Anstelle der Linearisierung kann auch eine andere Funktion f gewählt werden. Hier besteht das Problem, dass es zwar für den Photonenfluss $\Phi$ ($T_{BB}$) eine theoretische Abhängigkeit von der Schwarzkörpertemperatur $T_{BB}$ gibt. Es gehen jedoch in die gesamte Detektorantwort noch spektrale Empfindlichkeiten, Beschaffenheit der Halbleiter-Quantenköpfe, Details der AD-Wandlung und so weiter ein, sodass es für die Funktion f kein einfaches Modell gibt. Sicher ist nur die Monotonie in $T_{BB}$. Man könnte die Funktion zwar im Labor vermessen, dies ist jedoch zur Bestimmung der Kennlinienkorrekturfaktoren nicht nötig, denn die Faktoren $f_1 := f(\Phi(T_{BB1}))$ und $f_2 := f(\Phi(T_{BB2}))$ sind zwar unbekannt aber global gleich für alle Detektorelemente.

In einem weiteren Verfahrensabschnitt 30 wird der Dunkelstrom $\theta$ für die einzelnen Bildelemente bestimmt und in Kenntnis aller Werte für den Dunkelstrom $\theta$ können daraus die Kennlinienkorrekturfaktoren $\Theta$ für den Dunkelstrom bestimmt werden. In Bezug auf die Steigungen $\sigma$ nimmt der Dunkelstrom $\theta$ die Rolle eines Offsets ein. Er kann als Steigungskonstante abgezogen werden, sodass sich ergibt: $\sigma^{(1)} = \sigma - \theta.\sigma^{(1)}$ ist hierbei eine erste Korrektur der Steigung $\sigma$. Die absolute Steigung des Dunkelstroms $\theta$ muss hierbei nicht bekannt sein und kann auf einen Wert festgelegt werden, beispielsweise die Steigung $\sigma_1$ bei der geringeren Schwarzkörpertemperatur $T_{BB1}$, oder auf dem Steigungsmittelwert der beiden Steigungen $\sigma_1$ und $\sigma_2$. Dies ist beispielhaft in FIG 5 gezeigt.

FIG 5 zeigt ein Diagramm eines rechnerisch veränderten Signals s eines Detektorelements des Matrixdetektors 8. Das Signal s ist aufgetragen über die Integrationszeit t und gibt in seiner Steigung die Beziehung $\sigma^{(1)} = \sigma - \theta$ wieder, wobei als Dunkelstrom $\theta$ die Steigung $\sigma_1$ angenommen wurde. $\gamma$ und $\theta$ bleiben hierbei unverändert zu den Realmessungen aus FIG 4. Dieser Berechnung liegt die theoretische Annahme zugrunde, dass zwei Bilder mit unterschiedlichen Integrationszeiten t bei einer Schwarzkörpertemperatur $T_{BB0}$ bei 0 K aufgenommen wurden. Der Photonenfluss $\Phi$ ist 0, wobei der Dunkelstrom $\theta$ im Prinzip vorhanden ist und sich direkt aus der Steigung $\sigma_0$ ergeben würde, sodass der Dunkelstrom $\theta$ bekannt ist. Dieser kann nun abgezogen werden entsprechend der Gleichung $\sigma^{(1)} = \sigma - \theta$, wie in FIG 5 dargestellt ist.

Nun sind die drei Größen: Signaloffset $\omega$, Dunkelstrom $\theta$ und Gain $\gamma$ für das entsprechende Detektorelement bekannt. Auf diese Weise kann für eine Vielzahl oder alle Detektorelemente vorgegangen werden. Daraus können Referenzwerte für Signaloffset, Dunkelstrom und Gain bestimmt werden, aus denen mit den Individualwerten nun die einzelnen Kennlinienkorrekturfaktoren $\Omega$, $\Theta$ und $\Gamma$ für Signaloffset, Dunkelstrom und Gain für jedes Detektorelement berechnet werden können.

Um nun zu einem korrigierten Bild mit der vergleichbaren Helligkeit wie das Originalbild zu kommen, können nun die drei Größen Signaloffset $\Omega$, Dunkelstrom $\Theta$ und Gain $\Gamma$ so gewählt werden, dass das korrigierte Signal für jede Größe auf den Mittelwert der Größe korrigiert wird. Setzt man beispielsweise $\Theta = \sigma$ ($T_{BB1}$) an, so ergibt sich ein korrigiertes Bild entsprechend FIG 5: $\sigma^{(3)}$ ($T_{BB1}$) = Mean($\sigma(T_{BB1})$), welches als Konstante gut korrigiert ist. Es wird also der individuelle Gain $\Gamma$ des Detektorelements durch den Mittelwert ersetzt. Um nun zu den korrigierten Werten in Originalgröße entsprechend FIG 4, jedoch korrigiert, zu kommen, gilt $\sigma_2$ = Mean($\Delta(T_{BB1}, T_{BB2})$) + Mean($\sigma(T_{BB1})$). Ebenso kann zwischen den beiden Steigungen linear inter- und extrapoliert korrigiert werden. Schlussendlich kann der mittlere Signaloffset Mean$\Omega$ unabhängig von der Integrationszeit addiert werden.

Hinsichtlich konkreter Rechnungen kann die Bestimmung der Kennlinienkorrekturfaktoren wie folgt geschehen. Aus den vier Messwerten 22 $s(t_{1/2}, T_{BB1/2})$ zu zwei verschiedenen Integrationszeiten $t_1$ und $t_2$ sowie zwei Black-Body Temperaturen $T_{BB1}$ und $T_{BB2}$ wird zunächst der Offset $\omega$ sowie die Steigungen $\sigma$ in Bezug auf die Integrationszeit t berechnet:

$$\sigma(T_{BB1}) = (s(t_2, T_{BB1}) - s(t_1, T_{BB1})) / (t_2-t_1)$$

$$\sigma(T_{BB2}) = (s(t_2, T_{BB2}) - s(t_1, T_{BB2})) / (t_2-t_1)$$

$$\omega(T_{BB1}) = s(t_1, T_{BB1}) - t_1\, \sigma(T_{BB1})$$

$$\omega(T_{BB2}) = s(t_1, T_{BB2}) - t_1 \, \sigma(T_{BB2})$$

Gemäß des Modells sollte $\omega(T_{BB1}) = \Omega(T_{BB2})$ gelten, was meist in guter Näherung erfüllt ist. Es wird jedoch der noch etwas verbesserte Mittelwert $\omega = (\omega(T_{BB1}) + \omega(T_{BB2}))/2$ für die Korrektur benutzt. Für die Steigungen $\sigma$ gilt dies natürlich nicht, sie hängen von der Black-Body Temperatur $T_{BB}$ ab. Gemäß des Modells gilt für sie $\sigma(T_{BB}) = \gamma f(\Phi(T_{BB})) + \theta$

Hieraus sind jetzt die individuellen Gain- und Dunkelstromkoeffizienten $\gamma$ und $\theta$ zu bestimmen, die zudem abhängig von der Detektortemperatur sind. Der Matrixdetektor 8 wurde beispielsweise auf 104 Kelvin heruntergekühlt. Ausgehend von beiden Gleichungen:

$$\sigma(T_{BB1}) = \gamma \, f(\Phi(T_{BB1})) + \theta$$

$$\sigma(T_{BB2}) = \gamma \, f(\Phi(T_{BB2})) + \theta$$

wird dazu die Differenz berechnet:

$$\Delta(T_{BB1}, T_{BB2}) := \sigma(T_{BB2}) - \sigma(T_{BB1}) = \gamma \, (f(\Phi(T_{BB2}) - f(\Phi(T_{BB2})))$$

Der Dunkelstromanteil fällt durch die Differenzbildung heraus. Die multiplikativen Korrekturterme $\Gamma$ im Gain für die Detektorelemente sind dann individuell durch

$$\Gamma = \mathrm{Mean}(\Delta(T_{BB1}, T_{BB2})) / \Delta(T_{BB1}, T_{BB2})$$

gegeben, wobei Mean(...) die robuste Mitteilung über das ganze Bild bezeichnet und die Normierung der Korrekturen auf Mittelwert 1 garantiert. Man könnte die Normierung auch logarithmisch durchführen, was etwas besser den multiplikativen Charakter der $\Gamma$-Korrektur Rechnung trägt.

Es verbleibt die Berechnung der Dunkelstromanteils $\Theta$, welcher unabhängig von der Szenentemperatur ist, der aber später multiplikativ mit der Integrationszeit in die Berechnung der Kennlinienkorrekturfaktoren eingeht. Die exakte Extrapolation auf $f(\Phi=0)$ bzw. auch $f=0$, was wiederum die Kenntnis von $f$ voraussetzen würde, ist für die Korrektur wiederum nicht nötig, da man einen konstanten Offset in $f(\Phi)$ genauso gut auch im Dunkelstromanteil berücksichtigen kann (auch wenn dieser mit $\gamma$ gewichtet ist, er muss nur konstant sein). Formal machen somit auch negative Werte von $\Phi$ kein Problem. Als Bezugspunkt für die Korrektur wird

$$\theta = (\sigma(T_{BB1}) + \sigma(T_{BB1})) / 2$$

als Mittelwert der beiden Steigungsbilder angesetzt. Man könnte auch jedes der beiden Steigungsbilder verwenden, aber der obere Ansatz ist symmetrisch und liefert geringfügig bessere Ergebnisse.

Die Korrektur der Dunkelstromabweichungen erfolgt durch $\Theta = \mathrm{Mean}(\theta) - \theta$, womit die mittlere Korrektur Null ist.

Als Ergebnis der Laborvermessung liegen die Koeffizientensätze ("Bilder") $\Omega$, $\Gamma$, $\Theta$ vor. Die dabei für die Laborvermessung gewählten beiden Integrationszeiten t und beiden Detektortemperaturen $T_{BB}$ sind im Prinzip beliebig, sollten aber so gewählt werden, dass sie erstens die typische Dynamik gut abdecken und zweitens nicht im nichtlinearen Bereich der Detektorkennlinien liegen.

Ein weiterer Parameter ist die Detektortemperatur $T_D$, die bisher nicht betrachtet und als konstant angesetzt worden war. Um zu verschiedenen Detektortemperaturen insbesondere während des Cool-Down eine Kennlinienkorrektur durchführen zu können, würde man entsprechend zu verschiedenen Detektortemperaturen $T_D$ vermessen und entsprechende Interpolationskoeffizienten im Flugkörper 2 abspeichern, sodass

$$\Omega = \Omega(T_D), \; \Gamma = \Gamma(T_D), \; \Theta = \Theta(T_D)$$

vorliegen und entsprechend der aktuellen Detektortemperatur $T_D$ verwendet werden.

Da gegebenenfalls das Offset-Bild $\Omega$ zeitlich nicht so stabil ist wie das Gainbild $\Gamma$, brauchen die integrationszeitunabhängigen Offsets nicht gespeichert zu werden, da sie dynamisch aus den Doppelbildern $s(t_1)$, $s(t_2)$ berechnet

werden können, analog zur Laborvermessung:

$$\Omega = s(t_1) - t_1 (s(t_2) - s(t_1)) / (t_2 - t_1)$$

Mit dem Vorliegen aller drei Parametersätze ergibt sich nun das korrigierte Bild $S_{corr}$ bei Anwendung der Kennlinienkorrektur auf das Ausgangsbild s, aufgenommen mit Integrationszeit t, zu

$$S_{corr} = (s - \Omega - t \Theta) \Gamma + Mean(\Omega) + t \, Mean(\Theta)$$

In dieser Form sieht man sehr gut, dass die Offset-Korrektur sich aus dem integrationszeitunabhängigem $\Omega$ und dem zeitlich integriertem Dunkelstrom $t \Theta$ zusammensetzt. Das Addieren der Mittelwertbilder Mean($\Omega$) + t Mean($\Theta$) stellt den Erhalt des Mittelwerts, d. h. Mean(s) = Mean($S_{corr}$), sicher.

Anhand der Kennlinienkorrekturfaktoren $\Omega$, $\Gamma$, $\Theta$ kann nun beispielsweise der Lenkflugkörper 2 oder ein anderer Flugkörper gesteuert werden. Ein solches Verfahren ist beispielhaft in FIG 3 dargestellt. In einem ersten Verfahrensabschnitt 32 werden die Kennlinienkorrekturfaktoren $\Gamma$, $\Theta$ und optional auch $\Omega$ ermittelt, indem eine temperaturhomogene Fläche 20 auf den Matrixdetektor 8 abgebildet wird und die Fläche 20 bei zwei Temperaturen mit jeweils zwei Bildern unterschiedlicher Integrationszeit t aufgenommen wird. Die Black-Body Temperaturen sind beispielsweise 25°C und 65°C. Dies geschieht zweckmäßigerweise in einem Gebäude, sodass der Lenkflugkörper 2, dessen Suchkopf 4 oder nur die Optik 6 mit Matrixdetektor 8 und Steuereinheit 10 oder einer Bildverarbeitungseinheit, die die Bilddaten des Matrixdetektors 8 verarbeitet, in einem Gebäude sind. Die Kennlinienkorrekturfaktoren $\Gamma$, $\Theta$ und optional $\Omega$ werden in einem Datenspeicher 16 abgespeichert.

Im nachfolgenden Verfahrensabschnitt 34 kann der Lenkflugkörper 2 an einen Einsatzort transportiert werden oder er wird zunächst zu einem Lagerort transportiert und von dort später zu einem Einsatzort. Bei einem Einsatz 36 des Lenkflugkörpers 2 wird der Matrixdetektor 8 auf seine Einsatztemperatur heruntergekühlt, beispielsweise auf weniger als 150 Kelvin.

Vor, während oder nach dem Herunterkühlen des Matrixdetektors 8 auf seine Einsatztemperatur werden im Verfahrensschritt 38 die Kennlinienkorrekturfaktoren $\Omega$ für den Signaloffset ermittelt. Dies geschieht mit zumindest zwei Bildern, die unmittelbar hintereinander aufgenommen werden, und aus denen die Steigung $\sigma$, wie oben beschrieben, ermittelt wird. Die beiden Bilder sind in diesem Fall nicht von einer temperaturhomogenen Fläche, sondern können von einer Umgebungsszene um oder vor dem Lenkflugkörper 2 stammen. Da der Signaloffset unabhängig von der Integrationszeit und der Temperatur der aufgenommenen Szene ist, eignet sich im Wesentlichen jedwede Szene zum Berechnen der Kennlinienkorrekturfaktoren $\Omega$ für den Signaloffset. Sinnvoll ist es, diese der Detektortemperatur $T_D$ zuzuordnen und das Verfahren gegebenenfalls für zwei verschiedene Detektortemperaturen $T_D$ durchzuführen, um durch Extrapolation den Signaloffset auch bei Einsatztemperatur des Matrixdetektors 8 bestimmen zu können.

Anschließend wird der Lenkflugkörper 2 gestartet und die Objektszene vor dem Suchkopf 4 des Lenkflugkörpers 2 wird auf den Matrixdetektor 8 abgebildet. In Verfahrensschritt 40 werden die Signale s der einzelnen Bildelemente des Matrixdetektors 8 anhand der Kennlinienkorrekturfaktoren $\Omega$, $\Gamma$, $\Theta$ korrigiert und das aus diesen korrigierten Signalen s gewonnene Bild wird durch die Steuereinheit 10 analysiert zur Steuerung des Lenkflugkörpers 2 auf beispielsweise ein im Infrarotbereich strahlendes Ziel. Die Kennlinienkorrekturfaktoren $\Omega$, $\Gamma$, $\Theta$ liegen hierbei im Datenspeicher 16 entweder als Funktion in Abhängigkeit von der Detektortemperatur $T_D$ oder als mehrdimensionale Datenbasis vor, mittels derer durch Interpolation zur realen Detektortemperatur die Kennlinienkorrekturfaktoren $\Omega$, $\Gamma$, $\Theta$ errechnet werden können.

**Bezugszeichenliste**

| | |
|---|---|
| 2 | Lenkflugkörper |
| 4 | Suchkopf |
| 6 | Optik |
| 8 | Matrixdetektor |
| 10 | Steuereinheit |
| 12 | Lenkflügel |
| 14 | Wirkkörper |
| 16 | Datenspeicher |
| 18 | Bilder aufnehmen |

| 20 | Fläche |
|---|---|
| 22a-d | Messpunkt |
| 24 | $\sigma$ berechnen |
| 26 | $\Omega$ berechnen |
| 28 | $\Gamma$ berechnen |
| 30 | $\Theta$ berechnen |
| 32 | Kennlinienkorrekturfaktoren ermitteln |
| 34 | Verbringen zum Einsatzort |
| 36 | Herunterkühlen des Matrixdetektors |
| 38 | Bestimmung von $\Omega$ |
| 40 | Korrigieren der Signale |
| s | Signal |
| t | Integrationszeit |
| T | Temperatur |
| $\Phi$ | Photonenfluss |
| $\gamma$ | Aus Messwerten bestimmter Gain eines Detektorelements |
| $\Gamma$ | Kennlinienkorrekturfaktoren für den Gain |
| $\theta$ | Aus Messwerten bestimmter Dunkelstrom eines Detektorelements |
| $\Theta$ | Kennlinienkorrekturfaktoren für den Dunkelstrom |
| $\omega$ | Aus Messwerten bestimmter Signaloffset eines Detektorelements |
| $\Omega$ | Kennlinienkorrekturfaktoren für den Signaloffset |
| $\sigma$ | Steigung |

**Patentansprüche**

**1.** Verfahren zur Bestimmung von Kennlinienkorrekturfaktoren ($\Omega$, $\Gamma$, $\Theta$) eines im infraroten Spektralbereich abbildenden Matrixdetektors (8), der eine Vielzahl von zueinander zweidimensional angeordneten Detektorelementen umfasst, die jeweils als Signal einen Bildelementwert (22) ausgeben können oder bei dem die Signale von mehreren Detektorelementen zu einem einzigen Bildelementwert (22) zusammengeführt werden können, bei dem mit dem Matrixdetektor (8) eine Fläche (20) homogener Temperatur ($T_{BB}$) bei zwei verschiedenen Temperaturen ($T_{BB}$) der Fläche (20) mit jeweils zwei Bildern unterschiedlicher Integrationszeit (t) aufgenommen wird (18), **dadurch gekennzeichnet,** **dass** für jedes der Bildelemente aus den jeweils vier Bildelementwerten (22) zu den beiden Temperaturen ($T_{BB}$) jeweils eine Signalsteigung ($\sigma$) über die Integrationszeit (t) ermittelt wird (24) und aus der Differenz der Signalsteigungen ($\sigma$) der Gain des Bildelements ermittelt wird (28) und Kennlinienkorrekturfaktoren ($\Gamma$) für den Gain hinterlegt werden (32).

**2.** Verfahren nach Anspruch 1, **dadurch gekennzeichnet,** **dass** für jedes der Bildelemente der Signaloffset aus zumindest zwei einer der Temperaturen ($T_{BB}$) zugeordneten Bildelementwerten (22) ermittelt wird (26), der Signaloffset von den Bildelementwerten (22) abgezogen und dann der Gain ermittelt wird (28).

**3.** Verfahren nach Anspruch 1 oder 2, **dadurch gekennzeichnet,** **dass** die Kennlinienkorrekturfaktoren ($\Gamma$) für den Gain bestimmt werden während der Matrixdetektor (8) in einem Gebäude ist, und Kennlinienkorrekturfaktoren ($\Omega$) für den Signaloffset während einem späteren Einsatz eines Lenkflugkörpers (2), der den Matrixdetektor (8) enthält, bestimmt werden.

**4.** Verfahren nach einem der vorhergehenden Ansprüche, **dadurch gekennzeichnet,** **dass** die beiden Bilder mit unterschiedlicher Integrationszeit (t) unmittelbar hintereinander aufgenommen werden.

**5.** Verfahren nach einem der vorhergehenden Ansprüche, **dadurch gekennzeichnet,** **dass** unter Verwendung zumindest der einer der Temperaturen ($T_{BB}$) zugeordneten Bildpunkte ein Dunkelstrom ($\theta$) für jedes der Bildelemente festgelegt wird und die Kennlinien der den Bildelementen zugeordneten Detektorelemente unter Verwendung der Kennlinienkorrekturfaktoren (Θ) für den Dunkelstrom korrigiert werden (30, 40).

6. Verfahren nach Anspruch 5,
   **dadurch gekennzeichnet,**
   **dass** als Dunkelstrom (θ) eine der Signalsteigungen (σ) oder eine Summation aus beiden Signalsteigungen (σ) verwendet wird.

7. Verfahren nach einem der vorhergehenden Ansprüche,
   **dadurch gekennzeichnet,**
   **dass** als Gain (γ) die Differenz der beiden Signalsteigungen (σ) verwendet wird.

8. Verfahren nach einem der vorhergehenden Ansprüche,
   **dadurch gekennzeichnet,**
   **dass** der Kennlinienkorrekturfaktor (Γ) für den Gain die mittlere Differenz der Signalsteigungen (σ) dividiert durch die bildelementindividuelle Differenz der Signalsteigungen (σ) ist.

9. Verfahren nach einem der vorhergehenden Ansprüche,
   **dadurch gekennzeichnet,**
   **dass** der Signaloffset (ω) aus den Bildelementwerten (22) beider Aufnahmetemperaturen ($T_{BB}$) bestimmt wird und der Kennlinienkorrekturfaktor (Ω) für den Signaloffset der Bildelemente als Mittelwert aus den beiden Signaloffsets (ω) bestimmt wird.

10. Verfahren nach einem der vorhergehenden Ansprüche,
    **dadurch gekennzeichnet,**
    **dass** die Kennlinienkorrekturfaktoren (Ω, Γ, Θ) aus den beiden Temperaturen ($T_{BB}$) für eine Vielzahl von weiteren, unterschiedlichen Temperaturen interpoliert werden.

11. Verfahren nach einem der vorhergehenden Ansprüche,
    **dadurch gekennzeichnet,**
    **dass** die Detektortemperatur des Matrixdetektors (8) bestimmt wird und die Kennlinienkorrekturfaktoren (Ω, Γ, Θ) in Abhängigkeit der Detektortemperatur bestimmt werden.

12. Verfahren zum Steuern eines Lenkflugkörpers (2), bei dem die Kennlinienkorrekturfaktoren (Ω, Γ, Θ) nach einem der vorhergehenden Ansprüche ermittelt werden,
    **dadurch gekennzeichnet,**
    **dass** der Lenkflugkörper (2), enthaltend den Matrixdetektor (8) in einem Suchkopf (4), zu einem Einsatzort gebracht (34) und dort gestartet wird, mit dem Matrixdetektor (8) eine Umgebung mit zwei Bildern unterschiedlicher Integrationszeit (t) aufgenommen wird und für jedes der Bildelemente aus den beiden Bildelementwerten (22) ein Signaloffset ermittelt wird (38) und die Kennlinien der den Bildelementen zugeordneten Detektorelemente unter Verwendung der Kennlinienkorrekturfaktoren (Ω, Γ) für Signaloffset und Gain korrigiert werden (40) und der Lenkflugkörper (2) anhand von derart korrigierten Bildern des Matrixdetektors (8) gesteuert wird.

13. Verfahren nach Anspruch 12,
    **dadurch gekennzeichnet,**
    **dass** die beiden Bilder während eines Herunterkühlens des Matrixdetektors (8), das zum Herstellen einer Einsatzbereitschaft des Matrixdetektors (8) erfolgt, aufgenommen werden.

14. Lenkflugkörper (2) mit einem Suchkopf (4) enthaltend einen Matrixdetektor (8), einen Datenspeicher (16) und eine Steuereinheit (10) zum Steuern eines Einsatzflugs,
    **dadurch gekennzeichnet,**
    **dass** der Datenspeicher (16) nach einem der vorhergehenden Ansprüche ermittelte Kennlinienkorrekturfaktoren (Γ) für den Gain der Detektorelemente des Matrixdetektors (8) enthält.

15. Lenkflugkörper (2) nach Anspruch 14,
    **dadurch gekennzeichnet,**
    **dass** die Steuereinheit (10) dazu vorbereitet ist, Kennlinienkorrekturfaktoren (Ω) für den Signaloffset der Detektorelemente des Matrixdetektors (8) anhand von zwei unmittelbar hintereinander aufgenommenen Szenebildern unterschiedlicher Integrationszeit (t) während eines Einsatzes zu bestimmen.

**Claims**

1. Method for determining characteristic-curve correction factors ($\Omega$, $\Gamma$, $\Theta$) of a matrix detector (8) that images in the infrared spectral range, which matrix detector comprises a multiplicity of detector elements that are arranged in two dimensions in relation to one another, said detector elements each being able to output a pixel value (22) as a signal, or in which matrix detector the signals of a plurality of detector elements can be combined to form a single pixel value (22), in which method an area (20) of homogeneous temperature ($T_{BB}$) is recorded (18) at two different temperatures ($T_{BB}$) of the area (20) by the matrix detector (8), there being two images with different integration times (t) for each temperature,
   **characterized**
   **in that** a signal gradient ($\sigma$) over the integration time (t) is established (24) for each of the pixels from the four pixel values (22) at the two temperatures ($T_{BB}$) in each case and the gain of the pixel is established (28) from the difference of the signal gradients ($\sigma$) and characteristic-curve correction factors ($\Gamma$) for the gain are stored (32).

2. Method according to Claim 1,
   **characterized**
   **in that** the signal offset for each of the pixels is established (26) from at least two pixel values (22) that are assigned to one of the temperatures ($T_{BB}$), the signal offset is subtracted from the pixel values (22) and the gain is thereupon established (28).

3. Method according to Claim 1 or 2,
   **characterized**
   **in that** the characteristic-curve correction factors ($\Gamma$) for the gain are determined while the matrix detector (8) is in a building and characteristic-curve correction factors ($\Omega$) for the signal offset are determined during a subsequent use of a guided missile (2) that contains the matrix detector (8).

4. Method according to any one of the preceding claims,
   **characterized**
   **in that** the two images with different integration times (t) are recorded immediately in succession.

5. Method according to any one of the preceding claims,
   **characterized**
   **in that** a dark current ($\theta$) is determined for each of the pixels using at least the image points assigned to one of the temperatures ($T_{BB}$) and the characteristics of the detector elements assigned to the pixels are corrected (30, 40) using the characteristic-curve correction factors ($\Theta$) for the dark current.

6. Method according to Claim 5,
   **characterized**
   **in that** one of the signal gradients ($\sigma$) or a summation of both signal gradients ($\sigma$) is used as dark current ($\theta$).

7. Method according to any one of the preceding claims,
   **characterized**
   **in that** the difference of the two signal gradients ($\sigma$) is used as gain ($\gamma$).

8. Method according to any one of the preceding claims,
   **characterized**
   **in that** the characteristic-curve correction factor ($\Gamma$) for the gain is the mean difference of the signal gradients ($\sigma$) divided by the pixel-individual difference of the signal gradients ($\sigma$).

9. Method according to any one of the preceding claims,
   **characterized**
   **in that** the signal offset ($\omega$) is determined from the pixel values (22) at both recording temperatures ($T_{BB}$) and the characteristic-curve correction factor ($\Omega$) for the signal offset of the pixels is determined as a mean value of the two signal offsets ($\omega$).

10. Method according to any one of the preceding claims,
    **characterized**
    **in that** the characteristic-curve correction factors ($\Omega$, $\Gamma$, $\Theta$) from the two temperatures ($T_{BB}$) are interpolated for a multiplicity of further, different temperatures.

11. Method according to any one of the preceding claims,
   **characterized**
   **in that** the detector temperature of the matrix detector (8) is determined and the characteristic-curve correction factors ($\Omega$, $\Gamma$, $\Theta$) are determined as functions of the detector temperature.

12. Method for controlling a guided missile (2), in which the characteristic-curve correction factors ($\Omega$, $\Gamma$, $\Theta$) are established according to any one of the preceding claims,
   **characterized**
   **in that** the guided missile (2), containing the matrix detector (8) in a seeker head (4), is brought (34) to a deployment site and launched there, surroundings are recorded by the matrix detector (8) in two images with different integration times (t) and a signal offset is established (38) for each of the pixels from the two pixel values (22) and the characteristics of the detector elements that are assigned to the pixels are corrected (40) using the characteristic-curve correction factors ($\Omega$, $\Gamma$) for signal offset and gain and the guided missile (2) is controlled on the basis of images of the matrix detector (8) that were corrected thus.

13. Method according to Claim 12,
   **characterized**
   **in that** the two images are recorded while cooling the matrix detector (8), which is implemented to establish a readiness of the matrix detector (8).

14. Guided missile (2) having a seeker head (4) containing a matrix detector (8), a data memory (16) and a control unit (10) for controlling a deployment flight,
   **characterized**
   **in that** the data memory (16) contains characteristic-curve correction factors ($\Gamma$) for the gain of the detector elements of the matrix detector (8) established according to any one of the preceding claims.

15. Guided missile (2) according to Claim 14,
   **characterized**
   **in that** the control unit (10) is prepared to determine characteristic-curve correction factors ($\Omega$) for the signal offset of the detector elements of the matrix detector (8) on the basis of two scene images with different integration times (t) recorded directly in succession during a deployment.

**Revendications**

1. Procédé de détermination de facteurs de correction de courbes caractéristiques ($\Omega$, $\Gamma$, $\Theta$) d'un détecteur matriciel (8) de formation d'images dans la plage spectrale infrarouge, qui comprend une pluralité d'éléments détecteurs agencés bidimensionnellement les uns par rapport aux autres, qui peuvent respectivement délivrer une valeur d'élément d'image (22) en tant que signal, ou dans lequel les signaux de plusieurs éléments détecteurs peuvent être combinés en une seule valeur d'élément d'image (22), dans lequel une surface (20) de température homogène ($T_{BB}$) est acquise (18) à l'aide du détecteur matriciel (8) à deux températures ($T_{BB}$) différentes de la surface (20) avec respectivement deux images ayant des temps d'intégration (t) différents,
   **caractérisé en ce que**
   pour chacun des éléments d'image, une pente de signal ($\sigma$) est déterminée (24) au cours du temps de l'intégration (t) pour chacune des quatre valeurs d'éléments d'image (22) aux deux températures ($T_{BB}$), et le gain de l'élément d'image est déterminé (28) à partir de la différence entre les pentes de signal ($\sigma$), et les facteurs de correction de courbes caractéristiques ($\Gamma$) sont stockés (32) pour le gain.

2. Procédé selon la revendication 1,
   **caractérisé en ce que**,
   pour chacun des éléments d'image, le décalage de signal est déterminé (26) à partir d'au moins deux valeurs d'éléments d'image (22) associées à l'une des températures ($T_{BB}$), le décalage de signal est soustrait aux valeurs d'éléments d'image (22) puis le gain est déterminé (28).

3. Procédé selon la revendication 1 ou 2,
   **caractérisé en ce que**

les facteurs de correction de courbes caractéristiques (Γ) sont déterminés pour le gain pendant que le détecteur matriciel (8) est dans un bâtiment, et ses facteurs de correction de courbes caractéristiques (Ω) sont déterminés pour le décalage de signal pendant une opération ultérieure d'un missile guidé (2) qui contient le détecteur matriciel (8).

4. Procédé selon l'une des revendications précédentes,
**caractérisé en ce que**
les deux images sont acquises immédiatement l'une après l'autre avec des temps d'intégration (t) différents.

5. Procédé selon l'une des revendications précédentes, **caractérisé en ce qu'**un courant d'obscurité (θ) est déterminé pour chacun des éléments d'image en utilisant au moins les pixels associés à l'une des températures ($T_{BB}$) et les courbes caractéristiques des éléments détecteurs associés aux éléments d'image sont corrigées (30, 40) en utilisant les facteurs de correction de courbes caractéristiques (Θ) pour le courant d'obscurité.

6. Procédé selon la revendication 5,
**caractérisé en ce que**
l'une des pentes de signal (σ) ou une somme des deux pentes de signal (σ) est utilisée en tant que courant d'obscurité (θ).

7. Procédé selon l'une des revendications précédentes,
**caractérisé en ce que**
la différence des deux pentes de signal (σ) est utilisée en tant que gain (γ).

8. Procédé selon l'une des revendications précédentes,
**caractérisé en ce que**
le facteur de correction de courbe caractéristique (Γ) pour le gain est la différence moyenne des pentes de signal (σ) divisée par la différence des pentes de signal (σ) propre à l'élément d'image.

9. Procédé selon l'une des revendications précédentes,
**caractérisé en ce que**
le décalage de signal (ω) est déterminé à partir des valeurs d'éléments d'image (22) présentant les deux températures d'acquisition ($T_{BB}$) et le facteur de correction de courbe caractéristique (Ω) est déterminé pour le décalage de signal des éléments d'image comme étant une valeur moyenne des deux décalages de signal (ω).

10. Procédé selon l'une des revendications précédentes,
**caractérisé en ce que**
les facteurs de correction de courbes caractéristiques (Ω, Γ, Θ) sont interpolés à partir des deux températures ($T_{BB}$) pour une pluralité d'autres températures différentes.

11. Procédé selon l'une des revendications précédentes,
**caractérisé en ce que**
la température de détecteur du détecteur matriciel (8) est déterminée et les facteurs de correction de courbes caractéristiques (Ω, Γ, Θ) sont déterminés en fonction de la température de détecteur.

12. Procédé de commande d'un missile guidé (2), dans lequel les facteurs de correction de courbes caractéristiques (Ω, Γ, Θ) sont déterminés selon l'une des revendications précédentes,
**caractérisé en ce que**
le missile guidé (2), qui comporte le détecteur matriciel (8) dans une tête chercheuse (4), est amené (34) sur un site d'opération et y est lancé, un environnement est acquis à l'aide d'un détecteur matriciel (8) au moyen de deux images ayant des temps d'intégration différents (t), et un décalage de signal est déterminé (38) pour chacun des éléments d'image à partir des deux valeurs d'élément d'image (22) et les courbes caractéristiques des éléments détecteurs associés aux éléments d'image sont corrigées (40) en utilisant les facteurs de correction de courbes caractéristiques (Ω, Γ) pour le décalage de signal et le gain et le missile guidé (2) est commandé sur la base des images ainsi corrigées du détecteur matriciel (8).

13. Procédé selon la revendication 12,
**caractérisé en ce que**
les deux images sont acquises pendant un refroidissement du détecteur matriciel (8), qui est effectué pour préparer le détecteur matriciel (8) à une opération.

14. Missile guidé (2) comportant une tête chercheuse (4) contenant un détecteur matriciel (8), une mémoire de données (16) et une unité de commande (10) destinée à commander un vol opérationnel,
**caractérisé en ce que**
la mémoire de données (16) contient des facteurs de correction de courbes caractéristiques (Γ), déterminés selon l'une des revendications précédentes, pour le gain des éléments détecteurs du détecteur matriciel (8).

15. Missile guidé (2) selon la revendication 14,
**caractérisé en ce que**
l'unité de commande (10) est préparée pour déterminer des facteurs de correction de courbes caractéristiques (Ω) pour le décalage de signal des éléments détecteurs du détecteur matriciel (8) sur la base de deux images de scènes ayant des temps d'intégration différents (t), prises immédiatement l'une après l'autre pendant une opération.

## FIG 1

## FIG 2

## FIG 3

## FIG 4

## FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 3000789 A1